# EUROPÄISCHE PATENTSCHRIFT

(11) **EP 4 169 365 B1**
(45) Veröffentlichungstag und Bekanntmachung des Hinweises auf die Patenterteilung: **13.08.2025**
(21) Anmeldenummer: 22194025.7
(22) Anmeldetag: 06.09.2022
(51) Int. Cl.: A01C 5/04, A01C 11/02, A01G 23/04, A01C 21/00, B64U 10/13

(54) **TECHNIK ZUM AUTOMATISIERTEN BEPFLANZEN EINES GELÄNDES**
TECHNIQUE FOR THE AUTOMATED PLANTING OF A TERRAIN
TECHNIQUE DE PLANTATION AUTOMATISÉE D'UN TERRAIN

(30) Priorität: 21.10.2021 DE 102021127315
(43) Veröffentlichungstag der Anmeldung: 26.04.2023
(73) Patentinhaber: Berger Holding GmbH & Co. KG, 87700 Memmingen (DE)
(72) Erfinder: GERUNG, Matthias, 87497 Wertach (DE); KÖRNER, Martin, 88085 Langenargen (DE); MOSER, Thomas, 80992 München (DE)
(74) Vertreter: Lambacher, Michael

(56) Entgegenhaltungen:
- CN-A- 109 240 304
- CN-U- 205 284 453
- CN-U- 205 284 453
- KR-B1- 102 288 037
- US-A1- 2016 307 448
- US-A1- 2016 307 448
- US-A1- 2018 160 616
- US-A1- 2018 160 616
- US-A1- 2019 116 719

## Beschreibung

### Technisches Gebiet

Die Erfindung betrifft das Gebiet der Bepflanzung eines Geländes. Konkret wird eine Technik zum automatisierten Bepflanzen eines Geländes, insbesondere eines Waldgeländes, beschrieben.

### Hintergrund

Der einsetzende Klimawandel verursacht Extremwetterereignisse, die dem aktuellen Baumbestand schwer zusetzen. Langanhaltende Trocken- und Hitzeperioden schwächen die Wälder, so dass die Bäume anfälliger für Krankheiten und Borkenkäferbefall werden. Häufigere und schwerere Stürme verursachen zusätzliche Schäden. Dadurch wird der Baumbestand massiv verringert, so dass umfangreiche Aufforstungsmaßnahmen erforderlich sind, um dies auszugleichen. Die Aufforstung bzw. Bepflanzung eines schwer zugänglichen Geländes erfordert den Einsatz von geschultem Personal und geeigneten technischen Hilfsmitteln und ist somit zeitintensiv und kostspielig. Kleine und verstreute Gebiete, die bepflanzt werden sollen, werden häufig auf Grund des immensen Aufwands gar nicht mehr bepflanzt und zwangsläufig der Naturverjüngung überlassen.

Aus dem Stand der Technik sind verschiedene Hilfsmittel zum (automatisierten) Bepflanzen eines Geländes bekannt. Jedoch sind nahezu alle bekannten Hilfsmittel für die Landwirtschaft ausgelegt und daher nicht für unwegsames Gelände, wie beispielsweise Waldgebiete, geeignet. Beispielsweise ist im Zusammenhang mit der Aufforstung von Wäldern ein ferngesteuertes Kettenfahrzeug bekannt, welches Setzlinge im Waldgebiet pflanzen kann. Diese Fahrzeuge haben jedoch einen hohen Energieverbrauch und tragen zur Verdichtung des Waldbodens aufgrund ihres hohen Gewichts bei. Zudem können derartige Kettenfahrzeuge als Diesel-Hybrid-Fahrzeuge nur teilweise mit Strom betrieben werden.

Bekannt sind auch entsprechende Aufsätze für Bagger, die für die Aufforstung von Wäldern verwendet werden können. Durch den Einsatz von Baggern wird der Boden bei der Bepflanzung ebenfalls erheblich beeinträchtigt, beispielsweise verdichtet, oder gar aufgerissen. Lärm und Abgase kommen zusätzlich hinzu. Ein flexibler Einsatz dieser beiden Beispiele für die Bepflanzung kleiner und verstreuter Gebiete ist nicht vorteilhaft.

In der US 2018/160616 A1 wird eine Pflanzvorrichtung zum Pflanzen von Bäumen beschrieben, die auf einem Kettenfahrzeug montiert ist. Ferner wird in der CN 205 284 453 U eine sich eigenständig am Boden fortbewegende Pflanzvorrichtung beschrieben, die mit einer Überwachungsdrohne Daten austauscht. Ferner wird in der US 2016/307448 A1 ein Saatgutverteiler gelehrt, der mit einem hybriden Flugobjekt bestehend aus einem Gasballon mit Propellern gekoppt ist und in der Landwirtschaft zur Verteilung von Saatgut zum Einsatz kommt.

In der US 2019/116719 A1 wird ferner eine Drohne mit einem Topfbepflanzungssystem gelehrt, das Töpfe mit darin enthaltenen Samen oder Setzlingen abwirft.

Ferner wird in der CN 109 240 304 A das Aussäen von Saatgut mit Hilfe einer Drohne gelehrt. In der KR 102 288 037 B1 wird in Zusammenhang mit Militärtechnik der Einsatz einer Drohne zum Absetzen eines kleinen Bodenroboters an einem Einsatzort gelehrt.

Es ist wünschenswert, eine Technik bereitzustellen, mit der ein (unwegsames) Gelände, wie beispielsweise ein Waldgebiet, insbesondere bodenschonend bepflanzt werden kann. Des Weiteren ist es ebenfalls wünschenswert auch kleine Gebiete, wie sie zum Beispiel durch Einzelwürfe entstehen, effizient bepflanzen zu können. Zudem besteht der Bedarf an einer ressourcenschonenden automatisierten Bepflanzungstechnik. Mit einer derartigen Bepflanzungstechnik sollen Forstbetriebe und Waldbesitzer bei der Aufforstung von Waldgebieten unterstützt werden.

Aufgabe der vorliegenden Erfindung ist es daher, eine umweltschonende Bepflanzungstechnik für ein Gelände, insbesondere für ein Waldgebiet, bereitzustellen. Eine weitere Aufgabe der vorliegenden Erfindung ist es, eine effiziente und schnelle Bepflanzungstechnik zur Verfügung zu stellen. Ferner soll die bereitgestellte Bepflanzungstechnik flexibel an die individuellen Gegebenheiten des zu bepflanzenden Geländes angepasst werden können.

### Kurzer Abriss

Diese Aufgabe wird gemäß einem ersten Aspekt durch ein Verfahren zum Bepflanzen eines Geländes, insbesondere eines Waldgebiets, gelöst. Das erfindungsgemäße Verfahren umfasst hierbei folgende Schritte: Erstellen eines Datenmodells auf der Grundlage von Daten, die wenigstens das zu bepflanzende Gelände beschreiben, wobei das Datenmodell dazu vorgesehen ist, geeignete Pflanzstellen innerhalb des Geländes zu identifizieren; Identifizieren von geeigneten Pflanzstellen auf der Grundlage des erstellten Datenmodells; Bereitstellen wenigstens einer Drohne und wenigstens eines mit der wenigstens einen Drohne über ein Transportseil befestigten Pflanzroboters; Berechnen einer Flugroute auf der Grundlage der mit Hilfe des erstellten Datenmodells identifizierten Pflanzstellen; und automatisiertes Bepflanzen des Geländes gemäß der berechneten Flugroute mittels der wenigstens einen Drohne und des wenigstens einen Pflanzroboters, wobei die wenigstens eine Drohne derart gesteuert wird, dass sie den wenigstens einen Pflanzroboter an den jeweiligen identifizierten Pflanzstellen entlang der Flugroute absetzt, und der wenigstens eine an der jeweiligen Pflanzstelle abgesetzte Pflanzroboter derart gesteuert wird, dass er ein Pflanzloch an der Pflanzstelle bohrt, einen Setzling in das Pflanzloch setzt.

Die Begriffe "Gelände" und "Gebiet" werden in der vorliegenden Offenbarung synonym und somit austauschbar verwendet. Mit zu bepflanzendem Gelände oder Gebiet ist ein Stück Land gemeint, das bepflanzt (beispielsweise 0aufgeforstet) werden soll. Das zu bepflanzende Gelände stellt im geographischen Sinne ein Stück Erdoberfläche dar, das in seiner Flächenausdehnung begrenzt (und somit lokalisiert) ist. In der Regel wird das zu bepflanzende Gelände (Landstück oder Waldstück) von weiterem Gelände umgeben (beispielsweise einem angrenzenden Wald und/oder Land).

Das Datenmodell (im Folgenden auch Geländemodell genannt) wird auf der Grundlage von Daten erstellt, welche wenigstens das zu bepflanzende bzw. aufzuforstende Gelände beschreiben. Gemäß einer Variante können die Daten neben dem zu bepflanzenden Gelände auch noch Daten über die Umgebung des zu bepflanzenden Geländes umfassen. Dies kann insbesondere dann von Interesse sein, wenn das zu bepflanzende Gelände von Wald und/oder Bergen umgeben ist, um eine optimale Flugroute berechnen zu können.

Die Daten für das Geländemodell können insbesondere topographische Daten über das zu bepflanzende Gelände (und seine Umgebung) umfassen. Ferner können die Daten für das Geländemodell geomorphologische Daten, orographische Daten, Vegetationsdaten (beispielsweise Baumbestandsdaten), Positionsdaten des Geländes und/oder Positionsdaten über Leitungen/Trassen (z.B. Hochspannungsleitungen) umfassen. Diese Daten können mit Hilfe wenigstens einer Aufklärungsdrohne erfasst werden, die das zu bepflanzende Gelände (und seine Umgebung) überfliegen. Die wenigstens eine Aufklärungsdrohne kann hierbei wenigstens eine Kamera umfassen. Mit Hilfe, der wenigstens einen Kamera können fotographische Daten über das Gelände erfasst werden. Alternativ oder zusätzlich zur wenigstens einen Kamera kann die wenigstens eine Aufklärungsdrohne wenigstens einen Messsensor umfassen. Mit Hilfe des wenigstens einen Messsensors können die oben genannten geomorphologischen Daten, orographischen Daten, Vegetationsdaten und/oder Positionsdaten erfasst werden.

Zusätzlich oder alternativ zu der oben beschriebenen Aufklärungsdrohne können Aufklärungssatelliten oder andere Datenerfassungssysteme zur Erfassung der oben genannten Geländedaten zum Einsatz kommen.

Das Datenmodell für das zu bepflanzende Gelände wird auf der Grundlage der oben beschriebenen erfassten Geländedaten mit Hilfe einer Recheneinheit erstellt. Das erstellte Datenmodell (Geländemodell) kann hierbei ein computergestütztes 3D-Datenmodell sein, welches das zu bepflanzende Gelände (und seine Umgebung) zumindest in Hinblick auf seine Topographie und Vegetation (Vegetationszonen, Restvegetation usw.) graphisch beschreibt (bzw. graphisch modelliert). Insbesondere kann das 3D-Datenmodell Gebirgszüge, Täler, Geländeneigung, Gewässer (Bäche, Quellen, Flüsse), künstliche Trassen bzw. Leitungen des zu bepflanzenden Geländes (und seiner Umgebung) graphisch beschreiben (modellieren). Ferner kann das 3D-Datenmodell erfasste Klimadaten dem modellierten Gelände zuordnen.

Auf der Grundlage des erstellten Geländemodells werden geeignete Pflanzstellen im Gelände identifiziert (ausgewählt). Dies kann durch Vorgabe geeigneter Bepflanzungsparameter, wie beispielsweise Art der zu pflanzenden Pflanzen, Abstand der Pflanzen zueinander, Abstand zu Leitungen/Trassen, usw., erfolgen. Ein Benutzer (wie beispielsweise ein Förster) muss lediglich geeignete Bepflanzungsparameter im Datenmodell eingeben bzw. auswählen (sofern die Parameter bereits im Datenmodell hinterlegt sind). Somit kann die Identifizierung geeigneter Pflanzstellen im Gelände mit Hilfe des computergestützten 3D-Datenmodells vollautomatisch erfolgen.

Mit geeigneten Pflanzstellen sind jene Stellen im zu bepflanzenden Gelände gemeint, die abhängig von der Beschaffenheit des Geländes (wie beispielsweise Bodenfeuchtigkeit, Bodenbeständigkeit, Temperatur, Höhenlage und/oder Restvegetation) am geeignetsten sind oder erscheinen, um bestimmte Pflanzen bzw. Pflanzenarten zu pflanzen. Je nach eingesetzter Pflanzenart können hierbei Pflanzstellen ausgewählt werden, die genügend Platz für das Wachstum der Pflanzenart bieten. Zusätzlich können weitere externe, vom Menschen verursachte Faktoren, wie beispielsweise das Vorhandensein von Stromleitungen in Betracht gezogen werden. Durch die computergestützte Modellierung des zu bepflanzenden Geländes können die geeignetsten Pflanzstellen präzise und bestimmt werden, wodurch eine effiziente und optimierte Bepflanzung bzw. Aufforstung eines Geländes erst ermöglicht wird.

Mit Flugroute ist jene Flugstrecke gemeint, welche die wenigstens eine Drohne während der Bepflanzung zurücklegt (überfliegt). Zur Berechnung der Flugroute werden beispielsweise den zuvor beschriebenen, mit Hilfe des Geländemodells ermittelten Pflanzstellen (globale) Positionsdaten (beispielsweise GPS-Daten) zugeordnet. Anhand dieser Positionsdaten (und optionalen weiteren Daten, welche auch die Geländebeschaffenheit des Umgebungsgeländes beschreiben) kann dann die effizienteste (d.h. kürzeste und/oder energiesparendste) Flugroute zur Bepflanzung des Geländes berechnet werden.

Mit dem automatisierten Bepflanzen ist ein maschinelles Bepflanzen mit Hilfe der wenigstens einen Drohne und des wenigstens einen mit der wenigstens einen Drohne gekoppelten Pflanzroboters gemeint. Die wenigstens eine Drohne kann hierbei derart gesteuert werden, dass sie während des automatisierten Bepflanzens an den jeweiligen Pflanzstellen, über dem wenigstens einen Pflanzroboter schwebt. Die wenigstens eine Drohne kann hierbei in der Luft direkt oberhalb oder in unmittelbarer Nähe der Pflanzstelle verharren, während der wenigstens eine Pflanzroboter am Geländeboden aufsetzt und eine Pflanze (beispielsweise einen Baumsetzling) an der Pflanzstelle im Geländeboden einpflanzt. Durch das Schweben der Drohne während des Pflanzvorganges kann der Pflanzvorgang beschleunigt werden. Alternativ ist auch denkbar, dass die wenigsten eine Drohne derart gesteuert wird, dass sie zusammen mit dem wenigstens einen Pflanzroboter direkt an der Pflanzstelle oder in unmittelbarer Nähe davon auf der

Geländeoberfläche aufsetzt. In diesem Fall kann die Drohne während des Pflanzvorgangs abgeschaltet werden, um Energie zu sparen.

Die oben beschriebene Steuerung der wenigstens einen Drohne kann remote (also von einer entfernten Stelle via Funkverbindung) oder autonom erfolgen. Bei autonomer Steuerung können wenigstens die berechnete Flugroute und die Positionsdaten der Pflanzstellen entlang der Flugroute in einer Steuereinrichtung, in der wenigstens einen Drohne oder in dem wenigstens einen Pflanzroboter hinterlegt sein. In diesem Fall kann die wenigstens eine Drohne den Pflanzvorgang zusammen mit dem Pflanzroboter entlang der berechneten Flugroute (vollständig) autonom durchführen.

Optional kann in einem weiteren Pflanzschritt ein anschließendes Verteilen, mit Hilfe des Pflanzroboter, von organischem Material um die gepflanzte Pflanze herum erfolgen. Vor dem Bohrschritt kann zusätzlich ein Freiräumen der geeigneten Pflanzstelle erfolgen. Alle hier beschriebenen Schritte (inklusive des Schritts des Freiräumens) können durch Ansteuerung des wenigstens einen Pflanzroboters immer dann durchgeführt werden, wenn der wenigstens eine Pflanzroboter von der wenigstens einen Drohne an einer entsprechenden Pflanzstelle auf der Geländeoberfläche abgesetzt wurde.

Die Steuerung des wenigstens einen Pflanzroboters zur Durchführung der oben genannten Pflanzschritte kann wiederum remote (also von einer entfernten Stelle via Funkverbindung) oder autonom erfolgen. Bei autonomer Steuerung können wenigstens die zur Durchführung der oben genannten Pflanzschritte benötigten Steuerroutinen in einer Steuereinrichtung in der wenigstens einen Drohne oder in dem wenigstens einen Pflanzroboter hinterlegt sein. Zusätzlich kann das erfindungsgemäße Bepflanzungsverfahren ein Überprüfen des bepflanzten Geländes in vorgegebenen Zeitabständen umfassen. Hierbei können Informationen über das Wachstum der Bepflanzung und/oder Begleitvegetation gesammelt werden. Die gesammelte Information kann Aufschluss über den Erfolg der Bepflanzung bzw. Aufforstung des Geländes geben. Die gesammelte Information kann aber auch bei der Entscheidung über weitere Maßnahmen helfen, wie beispielsweise die Durchführung weiterer Bepflanzungen oder die Entfernung von Begleitvegetation. Die Überprüfung des bepflanzten Geländes kann mittels der wenigstens einen Drohne oder einer weiteren Aufklärungsdrohne erfolgen. Gemäß einem zweiten Aspekt der Erfindung wird ein System zur automatisierten Bepflanzung eines Geländes, insbesondere eines Waldgebiets bereitgestellt, wobei das System wenigstens eine Drohne und wenigstens einen Pflanzroboter umfasst, wobei der wenigstens eine Pflanzroboter Folgendes umfasst: eine Bohreinrichtung, die zum Bohren eines Pflanzlochs an einer Pflanzstelle im Gelände ausgelegt ist, und eine Setzeinrichtung, die zum Pflanzen eines Setzlings in das gebohrte Pflanzloch ausgelegt ist, wobei der wenigstens eine Pflanzroboter mit der wenigstens einen Drohne über ein Transportseil befestigt ist. Der Setzling kann ein Baum oder eine anderweitige Pflanze sein.

Die Bohreinrichtung kann einen Bohrer umfassen. Dieser kann derart dimensioniert und dazu ausgelegt sein, ein für die zu pflanzende Pflanze passend dimensioniertes Loch in die Erde zu bohren. Wie in Zusammenhang mit dem Verfahren weiter oben beschrieben, erfolgt der Bohrvorgang, nachdem der Pflanzroboter an einer geeigneten Pflanzstelle abgesetzt wurde.

Die Setzeinrichtung des Pflanzroboters kann ein Magazin zur Aufnahme von Setzlingen und einen Greifarm umfassen, wobei der Greifarm dazu ausgebildet ist, einen Setzling aus dem Magazin zu greifen und in das gebohrte Pflanzloch zu setzen. In dem Magazin sind die an den Pflanzstellen entlang der Flugroute zu setzenden Pflanzen (Setzlinge) aufgenommen. An jeder Pflanzstelle kann der Pflanzroboter mit Hilfe seines Greifarms eine Pflanze (Setzling) aus dem Magazin greifen und anschließend die Pflanze im gebohrten Pflanzloch platzieren (und andrücken). Anschließend kann der Pflanzroboter mit Hilfe seines Greifarms das durch den Bohrvorgang freigewordene organische Material um die gepflanzte Pflanze herum verteilen. Gemäß einer optionalen Implementierung kann der Pflanzroboter des Systems ferner einen Fräser umfassen. Der Fräser kann zum Freiräumen der Pflanzstelle ausgebildet sein. Das Freiräumen kann vor dem Bohrvorgang erfolgen.

Das System kann ferner eine Aufsetzeinrichtung umfassen, die zur Lagerung des Pflanzroboters im Gelände vorgesehen ist. Die Aufsetzeinrichtung ist insbesondere derart ausgebildet, dass der Pflanzroboter bzw. der Pflanzroboter zusammen mit der Drohne während des Pflanzvorgangs auf dem Geländeboden stabil steht (bzw. lagert). Die Aufsetzeinrichtung kann hierfür wenigstens drei Standbeine aufweisen, die an der Unterseite des Pflanzroboters angeordnet sind. Dadurch kann eine stabile und schonende Lagerung des Roboters (und der Drohne) im Gelände erreicht werden, da die Last des Roboters (und der Drohne) über mehrere Standbeine verteilt werden kann. Insbesondere wird durch die Standbeine der Geländeboden nur punktuell (also nur dort, wo die Beine am Boden aufliegen) belastet. Insbesondere kann jedes Standbein als ausfahrbares Teleskopstandbein realisiert sein. Dadurch kann eine stabile Lagerung des Roboters, insbesondere auch in Hanglagen erreicht werden, indem die Standbeine entsprechend der Neigung des Geländes und der Position des Roboters bezüglich der Geländeneigung ausgefahren werden. Der Roboter kann jedoch in einer weiteren Variante auch so ausgelegt werden, dass er sich selbstständig bewegen kann. Der wenigstens eine Pflanzroboter kann eine Steuereinrichtung (umfassend einen Prozessor und einen Speicher) umfassen. In der Steuereinrichtung (bzw. in seinem Speicher) können Steuerroutinen zur Steuerung der Bohreinrichtung und der Setzeinrichtung (Greifarm) hinterlegt sein. In der Steuereinrichtung können ferner Steuerroutinen zur Steuerung des Fräsers hinterlegt sein. Weist der Pflanzroboter wahlweise ausfahrbare Teleskopstandbeine aus, so kann die Steuereinrichtung ferner Steuerroutinen zur Steuerung der Teleskopstandbeine umfassen. Die Steuerung erfolgt durch den Prozessor der Steuereinrichtung, der die Steuerroutinen aus dem Speicher abruft. Auf diese Weise kann der Pflanzroboter sich selbst (also autonom) steuern.

Gemäß einer Implementierung können in der Steuereinrichtung des Pflanzroboters zusätzlich Daten zur Flugroute und den Positionsdaten der Pflanzstellen hinterlegt sein. Auf diese Weise kann über die Steuereinrichtung des Pflanzroboters auch die Flugbahn der Drohne gesteuert werden.

Der Pflanzroboter kann ferner eine eigene Energieversorgung umfassen, welche die Bohreinrichtung, die Setzeinrichtung und optional die betätigbare Teleskopstandbeine mit Energie versorgt. Die Steuereinrichtung des Pflanzroboters kann ebenso mit Energie aus der Energieversorgung versorgt werden. Als Energieversorgung kann eine aufladbare Batterie (Akku) zum Einsatz kommen, welche die Einrichtungen (beispielsweise elektrische Antriebe des Greifarms, der Bohreinrichtung und optional der Teleskopstandbeine) mit elektrischer Energie versorgt. Ebenso kann die Energie über eine Brennstoffzelle, einen Verbrennungs- oder Hybridmotor bereitgestellt werden.

Mit Hilfe des hier beschriebenen Systems wird das oben beschriebene Bepflanzungsverfahren durchgeführt.

Die wenigstens eine Drohne kann als Schwerlastdrohne ausgebildet sein. Die Drohne kann hierfür einen elektrischen Antrieb umfassend wenigstens einen Elektromotor oder einen hybriden Antrieb umfassend einen Elektromotor und einen Benzinmotor zum Antreiben der Rotoren umfassen. Durch den Einsatz von Elektromotoren können Lärm (Schutz der Tiere im Wald) und Emission von Abgasen beim Bepflanzungsvorgang deutlich reduziert werden. Unabhängig von der konkreten Antriebsart, muss die Drohne derart ausgestaltet sein, dass sie im Stande ist, den Pflanzroboter (mit den Setzlingen) zu tragen.

Der wenigstens eine Pflanzroboter ist durch ein (flexibles) Transportseil an der wenigstens einen Drohne befestigt. Dadurch kann die wenigstens eine Drohne derart gesteuert werden, dass sie während eines Bepflanzungsvorgangs mit entlastetem Transportseil über dem wenigstens einen Pflanzroboter schwebt. Durch den lastfreien Schwebevorgang während des Bepflanzungsvorgangs kann einerseits Energie gespart werden. Andererseits kann auch der Bepflanzungsvorgang beschleunigt werden, da die Drohne schneller zur nächsten Pflanzstelle weiterfliegen kann. Des Weiteren kann durch den Einsatz eines Transportseils sichergestellt werden, dass sich die Drohne in einer Höhe über dem Waldboden befindet, die eine zuverlässige (Funk-)Kommunikation mit dem Bediener/dem Controller/der Basisstation gewährleistet.

Das System kann ferner eine Steuereinrichtung zur Steuerung der wenigstens einen Drohne und/oder des wenigstens einen Pflanzroboters umfassen. Insbesondere können in der Steuereinrichtung die Flugroute der Drohne und die (globalen) Positionsdaten der Pflanzstellen hinterlegt sein. Wie in Zusammenhang mit dem Pflanzroboter weiter oben beschrieben, kann die Steuereinrichtung zur Steuerung des Pflanzroboters und der Drohne in dem Pflanzroboter integriert sein. Alternativ kann die Steuereinrichtung in der Drohne integriert sein oder über die Drohne und den Pflanzroboter verteilt ausgebildet sein.

Das System kann aus wenigstens zwei Drohnen und wenigstens zwei Pflanzrobotern bestehen, wobei jede Drohne der wenigstens zwei Drohnen mit jeweils einem der wenigstens zwei Pflanzroboter gekoppelt ist. Die wenigstens zwei Drohnen mit ihren Pflanzrobotern können zu einem Drohnenschwarm zusammengefasst sein. Jeder Drohne des Drohnenschwarms kann hierbei eine errechnete Flugroute mit Pflanzstellen zugeordnet werden, so dass jede Drohne ihren Pflanzroboter an den Pflanzstellen entlang der ihr zugewiesenen Flugroute absetzen kann. Durch die Verwendung eines Drohnenschwarms kann die Pflanzleistung deutlich erhöht werden und es können somit auch großflächige Gebiete zügig und effizient bepflanzt bzw. aufgeforstet werden.

Gemäß einem dritten Aspekt wird die Verwendung des oben beschriebenen Systems zur automatisierten Bepflanzung eines Geländes, insbesondere eines Waldgebiets, gemäß dem oben beschriebenen Bepflanzungsverfahren bereitgestellt.

### Kurze Beschreibung der Figuren

Weitere Einzelheiten und Vorteile der Erfindung werden anhand von in den Figuren dargestellten Ausführungsformen weiter beschrieben. Es zeigen:
- Figur 1: eine schematische Darstellung eines Systems zur Bepflanzung eines Geländes gemäß der vorliegenden Erfindung;
- Figur 2: ein Flussdiagramm zur schematischen Darstellung eines Verfahrens zum Bepflanzen eines Geländes gemäß der vorliegenden Erfindung;
- Figuren 3a-3i: schematische Darstellungen, welche Implementierungen des in Figur 1 gezeigten Systems und des in Figur 2 gezeigten Verfahrens zeigen.

### Detaillierte Beschreibung

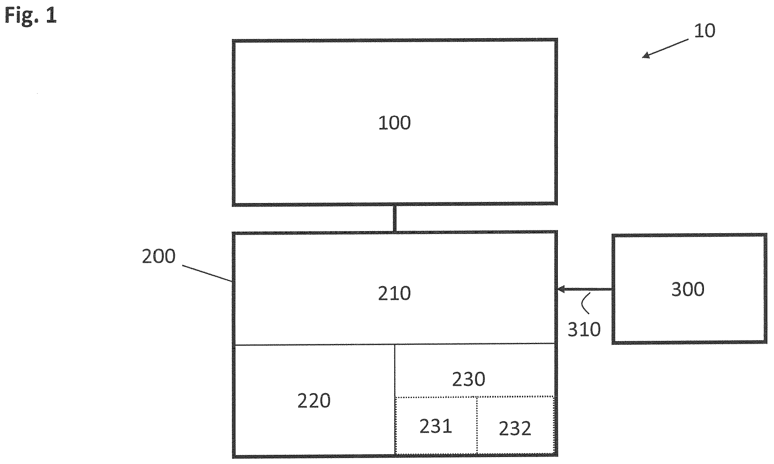

Im Zusammenhang mit Figur 1 wird ein System 10 zur Bepflanzung eines Geländes gemäß der vorliegenden Erfindung weiter beschrieben. Das System 10 umfasst eine Drohne 100 und einen Pflanzroboter 200. Der Pflanzroboter 200 ist über ein (flexibles) Transportseil an der Drohne 100 befestigt.

Das System 10 kann ferner eine Recheneinheit 300 umfassen, die nicht zwingend fest mit dem System 10 verbunden sein muss, sondern auch durch eine temporäre Verbindung (z.B. Steckerverbindung, drahtlose Verbindung) für die notwendige Dauer angeschlossen werden kann. Diese ist dazu ausgelegt, ein 3D-Geländemodell auf der Grundlage erfasster Geländedaten zu modellieren. Die Geländedaten können topographische Daten, geomorphologische Daten, orographische Daten und/oder Vegetationsdaten (beispielsweise Baumbestandsdaten) umfassen. Ferner können die Geländedaten Positionsdaten des Geländes und/oder Positionsdaten über Leitungen/Trassen (z.B. Hochspannungsleitungen), welche das Gelände durchqueren, umfassen.

Die Recheneinheit 300 kann so ausgelegt werden, dass sie geeignete Pflanzstellen (und deren Positionsdaten) im Gelände identifizieren und daraus die Flugroute für die Drohne 100 berechnen kann. Die für das 3D-Geländemodell notwendigen Daten können aber auch durch eine nur für diese Aufgabe speziell ausgelegte Drohne erfasst werden. Die Berechnung der Flugroute kann dann im Anschluss an einen solchen Geländedatenerfassungsflug mit Hilfe einer entsprechenden Software an einem Computer (Recheneinheit 300) erfolgen. Die finale Flugroute kann dann per Speichermedium (USB-Stick, SD-Karte, ...) oder per drahtloser Verbindung (W-Lan, Bluetooth, ...) an die Steuereinheit 210 übertragen werden.

Die Drohne 100 kann eine elektrisch betriebene Schwerlastdrohne sein, die den Pflanzroboter 200 zu tragen vermag. Gemäß einer Implementierung kann die Drohne 100 nicht nur beim nachstehend noch näher beschriebenen Pflanzvorgang zum Einsatz kommen, sondern auch zu Aufklärungszwecken, wie beispielsweise zum Erfassen von Daten über das zu bepflanzende Gelände (Geländedaten) oder zum Überprüfen des bepflanzten Geländes. Alternativ kann das System 10 neben der wenigstens einen Drohne 100 zusätzlich eine Aufklärungsdrohne umfassen (diese ist in der Figur 1 nicht dargestellt), welche zur Erfassung von Geländedaten eingesetzt wird.

Der Pflanzroboter 200 umfasst eine Steuereinrichtung 210, eine Bohreinrichtung 220 und eine Setzeinrichtung 230. Die Bohreinrichtung 220 umfasst einen Bohrer und ist zum Bohren eines Pflanzlochs an einer geeigneten Pflanzstelle im Gelände ausgelegt. Eine Fräsvorrichtung (nicht dargestellt) kann entweder in der Bohreinrichtung integriert oder als zusätzliches Modul verbaut werden.

Die Setzeinrichtung 230 ist zum Pflanzen eines Setzlings (Baum oder anderweitige Pflanze) im von der Bohreinrichtung 220 gebohrten Pflanzloch ausgelegt. Sie umfasst ein Magazin 231 zur Aufnahme von Setzlingen und einen Greifarm 232, der die Setzlinge aus dem Magazin 231 greift und in das Pflanzloch einsetzt.

Die Steuereinrichtung 210 ist dazu ausgelegt, den Pflanzroboter 200 und die Drohne 100 zur Durchführung des nachstehend noch näher beschriebenen Pflanzverfahrens anzusteuern. Entsprechende Steuerroutinen sind hierfür in einem Speicher der Steuereinrichtung 210 hinterlegt. Insbesondere können in der Steuereinrichtung 210 die berechneten Flugroutendaten und (globalen) Positionsdaten der Pflanzstellen entlang der Flugroute hinterlegt sein (in Figur 1 durch Pfeil 310 angedeutet). Ebenso sind sicherheitsrelevante Vorrichtungen zur Kollisionsvermeidung im autonomen Modus mit der Steuereinheit verbunden, so dass im Notfall die Steuereinheit 210 entsprechende Ausweichmanöver an die Drohne 100 sendet. Somit ist eine autonome Steuerung von Drohne 100 und Pflanzroboter 200 möglich.

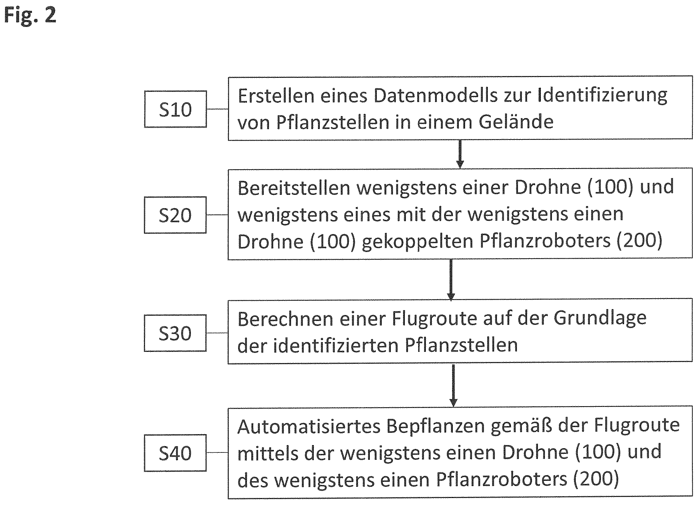

Im Zusammenhang mit der Figur 2 wird ein erfindungsgemäßes Pflanzverfahren weiter beschrieben, das mit Hilfe des in Zusammenhang mit der Figur 1 beschriebenen Systems 10 durchgeführt wird.

Gemäß einem ersten Schritt S10 wird mit Hilfe der Recheneinheit 300 ein Datenmodell auf der Grundlage von Daten erstellt, die das zu bepflanzende Gelände beschreiben. Die Daten über das Gelände können mit Hilfe einer Aufklärungsdrohne gesammelt werden. Zusätzlich oder alternativ können Satellitendaten über das Gelände herangezogen werden.

Das erstellte Datenmodell ist ein 3D-Geländemodell, das insbesondere die Topographie des Geländes modelliert. Das 3D-Geländemodell kann aber auch geomorphologische Daten, orographische Daten, Vegetationsdaten (beispielsweise Baumbestandsdaten) und/oder Positionsdaten über Leitungen/Trassen (z.B. Hochspannungsleitungen) umfassen,

In einem weiteren Schritt S20 werden die in Zusammenhang mit der Figur 1 beschriebene Drohne 100 und Pflanzroboter 200 bereitgestellt. Der Pflanzroboter 200 ist mit der Drohne 100 starr oder flexibel gekoppelt und wird von der Drohne 100 getragen. Es versteht sich, dass gemäß einer Implementierung mehrere Drohnen 100 mit jeweils einem dazugehörigen Pflanzroboter 200 bereitgestellt werden können, die zur Bepflanzung eines Geländes gleichzeitig eingesetzt werden können.

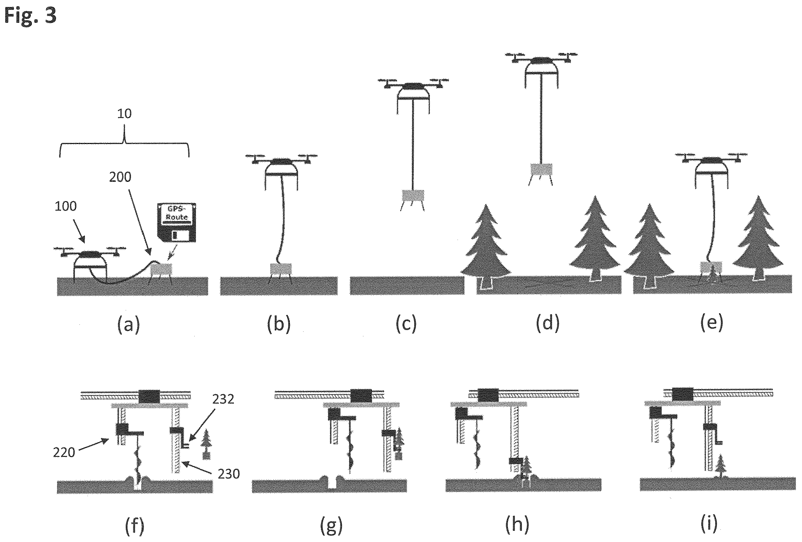

In einem weiteren Schritt S30 wird mit Hilfe der Recheneinheit 300 eine Flugroute für die Drohne 100 auf der Grundlage des Datenmodells berechnet. Hierfür werden zunächst auf der Grundlage des 3D-Geländemodels und vorgegebener Bepflanzungsparameter geeignete Pflanzstellen im Gelände und deren (globale) Positionsdaten ermittelt. Die vorgegebenen Bepflanzungsparameter können beispielsweise auf die Art der zu pflanzenden Pflanzen, den Abstand der Pflanzen untereinander und zu Leitungen/Trassen hinweisen. Auf der Grundlage der Positionsdaten der Pflanzstellen kann dann die effizienteste Flugroute zur Bepflanzung des Geländes berechnet werden. Die so berechnete Flugroute wird dann zusammen mit den Positionsdaten der Pflanzstellen auf die Steuereinrichtung 210 des Pflanzroboters 200 übertragen (siehe auch Fig. 3(a)).

In einem darauffolgenden Schritt S40 wird das Gelände mit der wenigstens einen Drohne 100 und dem daran gekoppelten Pflanzroboter 200 überflogen. An den Positionen einer jeden Pflanzstelle wird die Drohne 100 abgesenkt, so dass der Pflanzroboter 200 am Geländeboden aufsetzt, ein Loch bohren kann und einen Setzling in den Geländeboden einpflanzen kann.

Im Zusammenhang mit den Figuren 3a-3i wird eine Implementierung des in Figur 1 gezeigten Systems 10 und des in Figur 2 gezeigten Pflanzverfahrens weiter beschrieben.

Das in den Figuren 3a-3i gezeigte System 10 umfasst eine Drohne 100, insbesondere eine Schwerlastdrohne, welche über ein flexibles Transportseil mit dem Pflanzroboter 200 gekoppelt ist. Der Pflanzroboter 200 weist ferner eine Absetzeinrichtung auf, welche mindestens drei Standbeine aufweist. Die mit Hilfe des 3D-Geländemodells ermittelten Positionsdaten geeigneter Pflanzstellen sowie die daraus berechnete Flugroute werden in die Steuereinrichtung 210 (siehe Figur 2) des Pflanzroboters 200 gespeichert. Dieser Schritt ist in Figur 3a dargestellt (siehe Diskettensymbol, das die Datenübertragung symbolisiert).

Die Drohne 100 wird mit Hilfe der Steuereinrichtung 210 (und den darin hinterlegten Steuerroutinen) nun so gesteuert, dass sie langsam aufsteigt bis das Transportseil gespannt ist (siehe Figur 3b). Die Drohne 100 steigt weiter auf, wodurch der Pflanzroboter 200 vom Boden abhebt (siehe Figur 3c). Anschließend fliegt die Drohne 100 den Pflanzroboter entlang der vorgegeben Flugroute zur ersten Pflanzstelle (siehe Figur 3c). Oberhalb der ersten Pflanzstelle bleibt die Drohne 100 stehen (siehe Figur 3d). Die Drohne 100 wird nun (durch die Steuereinrichtung 210) so lange abgesenkt, bis der Pflanzroboter 200 auf dem Geländeboden aufsetzt und das Transportseil lastfrei wird (siehe Figur 3e). Die Drohne 100 wird durch die Steuereinrichtung 210 ferner derart gesteuert, dass sie während der nun anschließenden automatisierten Bepflanzung an oder in unmittelbarer Nähe der Pflanzstelle über dem Pflanzroboter 200 schwebt (siehe Figur 3e).

Der Bepflanzungsvorgang wird nun in Zusammenhang mit den Figuren 3a-3i weiter beschrieben. Zunächst wird die Pflanzstelle, sofern notwendig, durch einen Fräser des Pflanzroboters 200 freigeräumt (in Figur 3 nicht dargestellt). Anschließend wird mit Hilfe der Bohreinrichtung 220 des Pflanzroboters 200 an der Pflanzstelle ein entsprechendes Pflanzloch in die Erde gebohrt (siehe Figur 3f). Im Anschluss daran wird mit Hilfe des Greifarms 232 des Pflanzroboters 200 ein Setzling aus dem Magazin 231 gegriffen (siehe Figur 3g). Der Setzling wird mit Hilfe des Greifarms 232 in Richtung des Pflanzlochs befördert und in das Pflanzloch eingesetzt und leicht angedrückt (siehe Figur 3h). Schließlich wird das zuvor durch den Bohrvorgang an die Oberfläche beförderte organische Material um den Setzling herum verteilt (und optional weiter angedrückt) (siehe Figur 3i).

Der Pflanzvorgang an der ersten Pflanzstelle ist nun beendet und die Drohne 100 wird nun derart angesteuert, dass sie den Pflanzroboter 200 wieder anhebt und zur nächsten Pflanzstelle der Flugroute fliegt. Die in den Figuren 3c-3i dargestellten Schritte werden für jede Pflanzstelle entlang der Flugroute wiederholt. Am Ende der Flugroute kehrt die Drohne 100 zusammen mit dem Pflanzroboter 200 in ihre Ausgangsposition zurück.

Das hier beschriebene Bepflanzungsverfahren sowie Bepflanzungssystem hat gegenüber herkömmlichen Systemen wie eingangs beschrieben den Vorteil, dass es eine schonende und umweltfreundliche Bepflanzung eines Geländes ermöglicht. Durch das punktuelle Absetzen des Pflanzroboters 200 an entsprechenden Pflanzstellen des Geländes wird der Geländeboden geschont. Insbesondere wird verhindert, dass der Boden im Gelände aufgerissen wird, was beispielsweise beim Einsatz von Baggern oder Raupenfahrzeugen zum Bepflanzen eines Geländes der Fall ist. Durch die Verwendung einer elektrisch angetriebenen Drohne ist es ferner möglich, den Pflanzvorgang emissionsarm zu gestalten. Ferner können durch das hier beschriebene Modellieren des zu bepflanzenden Geländes geeignete Pflanzstellen ermittelt werden, wodurch ein besonderes effizientes Aufforsten eines Geländes ermöglicht wird.

Durch die Verwendung des hier beschriebenen Systems 10, das im Wesentlichen autonom gesteuert wird, ist es ferner möglich, großflächige, zum Teil auch schwer zugängliche Gebiete mit geringem Personalaufwand schnell und effizient aufzuforsten. Dies gilt insbesondere dann, wenn mehrere der hier beschriebenen Drohnen mit Pflanzrobotern gleichzeitig in Form eines Drohnenschwarms eingesetzt werden.

Des Weiteren ist mit diesem System auch die Bepflanzung von kleinen und verstreuten Gebieten ohne zusätzlichen Aufwand möglich. Durch die technisch bedingte Maximallast kann das System 10 nur eine bestimmte Anzahl an Setzlingen transportieren und einpflanzen. Sind alle Setzlinge eingepflanzt, kehrt die Drohne 100 zum Startpunkt zurück, wo das Setzlingsmagazin aufgefüllt und die Akkus getauscht oder Treibstofftank gefüllt werden kann. Anschließend kann die Drohne wieder starten. Es spielt jedoch keine Rolle, ob das Gebiet des ersten Fluges so groß ist, dass mehrere Flüge für die vollständige Bepflanzung nötig sind, oder aber es sich um mehrere kleine Gebiete in der Umgebung des Startpunktes handelt, die jeweils mit nur einem Bepflanzungsflug vollständig bepflanzt werden können. Im letzteren Fall ist das System 10 allen bisher bekannten technischen Lösungen (Kettenfahrzeug, Bagger, ...) sowie der konventionellen manuellen Bepflanzung deutlich überlegen.

## Patentansprüche

1. Verfahren zum Bepflanzen eines Geländes, insbesondere eines Waldgebiets, umfassend:
Erstellen eines Datenmodells auf der Grundlage von wenigstens das zu bepflanzende Gelände beschreibenden Daten, wobei das Datenmodell dazu vorgesehen ist, geeignete Pflanzstellen innerhalb des Geländes zu identifizieren;
Identifizieren von geeigneten Pflanzstellen auf der Grundlage des erstellten Datenmodells;
Bereitstellen wenigstens einer Drohne (100) und wenigstens eines mit der wenigstens einen Drohne (100) über ein Transportseil befestigten Pflanzroboters (200);
Berechnen einer Flugroute auf der Grundlage der mit Hilfe des Datenmodells identifizierten Pflanzstellen; und
automatisiertes Bepflanzen des Geländes gemäß der berechneten Flugroute mittels der wenigstens einen Drohne (100) und des wenigstens einen Pflanzroboters (200), wobei die wenigstens eine Drohne (100) derart gesteuert wird, dass sie den wenigstens einen Pflanzroboter (200) an den jeweiligen identifizierten Pflanzstellen entlang der Flugroute absetzt, und der wenigstens eine an der jeweiligen Pflanzstelle abgesetzte Pflanzroboter derart gesteuert wird, dass er ein Pflanzloch an der Pflanzstelle bohrt, und einen Setzling in das Pflanzloch setzt.

2. Verfahren nach Anspruch 1, ferner umfassend:
Erfassen von das zu bepflanzende Gelände beschreibenden Daten, wobei die erfassten Daten wenigstens topographische Daten des Geländes umfassen.

3. Verfahren nach Anspruch 2, wobei das Erfassen der Daten unter Einsatz wenigstens einer Aufklärungsdrohne durchgeführt wird, die mittels wenigstens einer Kamera und/oder wenigstens eines Sensors Daten über das Gelände sammelt.

4. Verfahren nach einem der vorhergehenden Ansprüche, wobei die Flugroute anhand von den identifizierten Pflanzstellen zuordenbaren Positionsdaten berechnet wird.

5. Verfahren nach einem der Ansprüche 1 bis 4, wobei die wenigstens eine Drohne (100) derart gesteuert wird, dass sie während des automatisierten Bepflanzens an den jeweiligen Pflanzstellen über dem Pflanzroboter (200) schwebt oder ruht.

6. Verfahren nach einem der vorhergehenden Ansprüche, ferner umfassend:
Überprüfen des bepflanzten Geländes in vorgegebenen Zeitabständen.

7. Verfahren nach Anspruch 6, wobei das Überprüfen ein Sammeln von Informationen über das Wachstum der Bepflanzung und/oder Begleitvegetation umfasst.

8. System (10) zur automatisierten Bepflanzung eines Geländes, insbesondere eines Waldgebiets, wobei das System wenigstens eine Drohne (100) und wenigstens einen Pflanzroboter (200) umfasst, wobei der wenigstens eine Pflanzroboter (200) umfasst:
eine Bohreinrichtung (220), die zum Bohren eines Pflanzlochs an einer Pflanzstelle im Gelände ausgelegt ist, und
eine Setzeinrichtung (230), die zum Pflanzen eines Setzlings in das gebohrte Pflanzloch ausgelegt ist,
wobei der wenigstens eine Pflanzroboter (200) mit der wenigstens einen Drohne (100) über ein Transportseil befestigt ist.

9. System (10) nach Anspruch 8, wobei die Setzeinrichtung (200) des Pflanzroboters (200) ein Magazin (231) zur Aufnahme von Setzlingen und einen Greifarm (232) umfasst, wobei der Greifarm (232) dazu ausgebildet ist, einen Setzling aus dem Magazin zu greifen und in das gebohrte Pflanzloch zu setzen.

10. System (10) nach Anspruch 9 oder 10, wobei der Pflanzroboter (200) ferner eine Aufsetzeinrichtung umfasst, die zur Lagerung des Pflanzroboters (200) im Gelände vorgesehen ist.

11. System (10) nach Anspruch 10, wobei die Aufsetzeinrichtung wenigstens drei Standbeine umfasst, die an der Unterseite des Pflanzroboters (200) angeordnet sind, wobei jedes Standbein als ausfahrbares Teleskopstandbein realisiert ist.

12. System (10) nach einem der Ansprüche 8 bis 11, wobei der Pflanzroboter (200) ferner einen Fräser umfasst, der dazu ausgebildet ist, die Pflanzstelle freizuräumen.

13. System (10) nach einem der Ansprüche 8 bis 12, wobei der Pflanzroboter (200) ferner eine Steuereinrichtung (210) zur Steuerung der Bohreinrichtung und/oder Setzeinrichtung umfasst.

14. System (10) nach einem der Ansprüche 8 bis 13, wobei das System (10) wenigstens zwei Drohnen (100) und wenigstens zwei Pflanzroboter (200) umfasst, wobei jede Drohne (100) der wenigstens zwei Drohnen (100) mit jeweils einem der wenigstens zwei Pflanzroboter (200) gekoppelt ist.

15. System nach einem der Ansprüche 8 bis 14, wobei wenigstens zwei Drohnen mit ihren Pflanzrobotern (200) zu einem Drohnenschwarm zusammengefasst sind.

16. System (10) nach einem der Ansprüche 8 bis 15, ferner umfassend eine Steuereinrichtung (210) zur Steuerung der wenigstens einen Drohne (100) und/oder des wenigstens einen Pflanzroboters (200).

17. Verwendung des Systems (10) gemäß einem der Ansprüche 8 bis 16 zur automatisierten Bepflanzung eines Geländes, insbesondere eines Waldgebiets.

## Claims

1. Method for planting a terrain, in particular a forest area, comprising:
creating a data model on the basis of data describing at least the terrain to be planted, wherein the data model is intended to identify suitable planting locations within the terrain;
identifying suitable planting locations on the basis of the created data model;
providing at least one drone (100) and at least one planting robot (200) attached to the at least one drone (100) via a transport cable;
calculating a flight route on the basis of the planting locations identified with the aid of the data model; and
automatically planting the terrain in accordance with the calculated flight route by means of the at least one drone (100) and the at least one planting robot (200), wherein the at least one drone (100) is controlled in such a way that it deposits the at least one planting robot (200) at the respective identified planting locations along the flight route, and the at least one planting robot deposited at the respective planting location is controlled in such a way that it drills a planting hole at the planting location and places a seedling in the planting hole.

2. Method according to claim 1, further comprising:
acquiring data describing the terrain to be planted, wherein the acquired data comprise at least topographical data of the terrain.

3. Method according to claim 2, wherein the acquiring of the data is performed using at least one reconnaissance drone that collects data about the terrain by means of at least one camera and/or at least one sensor.

4. Method according to one of the preceding claims, wherein the flight route is calculated on the basis of position data that can be assigned to the identified planting locations.

5. Method according to one of claims 1 to 4, wherein the at least one drone (100) is controlled in such a way that it hovers or rests above the planting robot (200) at the respective planting locations during the automated planting.

6. Method according to one of the preceding claims, further comprising:
checking the planted terrain at predetermined time intervals.

7. Method according to claim 6, wherein the checking comprises collecting information about the growth of the planting and/or accompanying vegetation.

8. System (10) for automated planting of a terrain, in particular a forest area, wherein the system comprises at least one drone (100) and at least one planting robot (200), wherein the at least one planting robot (200) comprises:
a drilling device (220) configured to drill a planting hole at a planting location in the terrain, and
a placing device (230) configured to plant a seedling in the drilled planting hole,
wherein the at least one planting robot (200) is attached to the at least one drone (100) via a transport cable.

9. System (10) according to claim 8, wherein the placing device (230) of the planting robot (200) comprises a magazine (231) for receiving seedlings and a gripper arm (232), wherein the gripper arm (232) is configured to grip a seedling from the magazine and place it in the drilled planting hole.

10. System (10) according to claim 9 or 10, wherein the planting robot (200) further comprises a set-down device which is provided for supporting the planting robot (200) on the terrain.

11. System (10) according to claim 10, wherein the set-down device comprises at least three support legs arranged on the underside of the planting robot (200), wherein each support leg is realized as an extendable telescopic support leg.

12. System (10) according to any one of claims 8 to 11, wherein the planting robot (200) further comprises a cutter designed to clear the planting location.

13. System (10) according to one of claims 8 to 12, wherein the planting robot (200) further comprises a control device (210) for controlling the drilling device and/or the placing device.

14. System (10) according to one of claims 8 to 13, wherein the system (10) comprises at least two drones (100) and at least two planting robots (200), wherein each drone (100) of the at least two drones (100) is coupled to one of the at least two planting robots (200).

15. System according to one of claims 8 to 14, wherein at least two drones are combined with their planting robots (200) to form a drone swarm.

16. System (10) according to one of claims 8 to 15, further comprising a control device (210) for controlling the at least one drone (100) and/or the at least one planting robot (200).

17. Use of the system (10) according to one of claims 8 to 16 for the automated planting of a terrain, in particular a forest area.

## Revendications

1. Procédé pour planter un terrain, en particulier une zone forestière, comprenant :
créer un modèle de données sur la base de données décrivant au moins le terrain à planter, dans lequel le modèle de données est prévu pour identifier des emplacements de plantation appropriés à l'intérieur du terrain ;
identifier des emplacements de plantation appropriés sur la base du modèle de données créé ;
mise à disposition d'au moins un drone (100) et d'au moins un robot de plantation (200) fixé à l'au moins un drone (100) par un câble de transport ;
calculer un itinéraire de vol sur la base des emplacements de plantation identifiés à l'aide du modèle de données ; et
planter automatiquement le terrain conformément à l'itinéraire de vol calculé à l'aide de l'au moins un drone (100) et de l'au moins un robot de plantation (200), dans lequel l'au moins un drone (100) est commandé de telle sorte qu'il dépose l'au moins un robot de plantation (200) aux emplacements de plantation respectifs identifiés le long de la route de vol, et l'au moins un robot de plantation déposé à l'emplacement de plantation respectif est commandé de telle manière qu'il fore un trou de plantation à l'emplacement de plantation et place un plant dans le trou de plantation.

2. Procédé selon la revendication 1, comprenant en outre :
acquérir des données décrivant le terrain à planter, dans lequel les données acquises comprennent au moins des données topographiques du terrain.

3. Procédé selon la revendication 2, dans lequel l'acquisition des données est effectuée à l'aide d'au moins un drone de reconnaissance qui collecte des données sur le terrain au moyen d'au moins une caméra et/ou d'au moins un capteur.

4. Procédé selon l'une des revendications précédentes, dans lequel l'itinéraire de vol est calculé à l'aide de données de position pouvant être attribuées aux emplacements de plantation identifiés.

5. Procédé selon l'une des revendications 1 à 4, dans lequel l'au moins un drone (100) est commandé de telle manière qu'il vole en stationnaire ou reste au-dessus du robot de plantation (200) aux emplacements de plantation respectifs pendant la plantation automatisée.

6. Procédé selon l'une des revendications précédentes, comprenant en outre :
la vérification du terrain planté à des intervalles de temps prédéterminés.

7. Procédé selon la revendication 6, dans lequel la vérification comprend la collecte d'informations sur la croissance des plantations et/ou de la végétation environnante.

8. Système (10) pour la plantation automatisée d'un terrain, en particulier d'une zone forestière, le système comprenant au moins un drone (100) et au moins un robot de plantation (200), dans lequel l'au moins un robot de plantation (200) comprend :
un dispositif de forage (220) configuré pour forer un trou de plantation à un emplacement de plantation dans le terrain, et
un dispositif de mise en place (230) configuré pour planter un plant dans le trou de plantation foré,
dans lequel l'au moins un robot de plantation (200) est fixé à l'au moins un drone (100) par un câble de transport.

9. Système (10) selon la revendication 8, dans lequel le dispositif de mise en place (230) du robot de plantation (200) comprend un magasin (231) destiné à recevoir des plants et un bras de préhension (232), dans lequel le bras de préhension (232) est configuré pour saisir un plant dans le magasin et le placer dans le trou de plantation foré.

10. Système (10) selon la revendication 9 ou 10, dans lequel le robot de plantation (200) comprend en outre un dispositif de pose qui est prévu pour soutenir le robot de plantation (200) sur le terrain.

11. Système (10) selon la revendication 10, dans lequel le dispositif de pose comprend au moins trois pieds de support qui sont disposés sur la face inférieure du robot de plantation (200), chaque pied de support étant réalisé sous la forme d'un pied de support télescopique extensible.

12. Système (10) selon l'une des revendications 8 à 11, dans lequel le robot de plantation (200) comprend en outre une fraise conçue pour dégager l'emplacement de plantation.

13. Système (10) selon l'une des revendications 8 à 12, dans lequel le robot de plantation (200) comprend en outre un dispositif de commande (210) pour commander le dispositif de forage et/ou le dispositif de mise en place.

14. Système (10) selon l'une des revendications 8 à 13, dans lequel le système (10) comprend au moins deux drones (100) et au moins deux robots de plantation (200), chaque drone (100) des au moins deux drones (100) étant couplé à l'un des au moins deux robots de plantation (200).

15. Système selon l'une des revendications 8 à 14, dans lequel au moins deux drones sont regroupés avec leurs robots de plantation (200) pour former un essaim de drones.

16. Système (10) selon l'une des revendications 8 à 15, comprenant en outre un dispositif de commande (210) pour commander l'au moins un drone (100) et/ou l'au moins un robot de plantation (200).

17. Utilisation du système (10) selon l'une des revendications 8 à 16 pour la plantation automatisée d'un terrain, en particulier d'une zone forestière.
